# EUROPEAN PATENT APPLICATION

(11) **EP 1 109 116 A1**
(43) Date of publication of application: **20.06.2001**
(21) Application number: 99124940.0
(22) Date of filing: 14.12.1999
(51) Int. Cl.: G06F 17/30

(54) **Method for visually filtering a database**

(71) Applicant: SUN MICROSYSTEMS, INC., Palo Alto, California 94303 (US)
(72) Inventor: grobler, Dirk, 24537 Neumünster (DE)
(74) Representative: Betten & Resch

(57) **Abstract**

The invention relates to a method for enabling a user to define the filter conditions for accessing a database based on an input form (500), said form containing fields where a user can set the filter conditions for one or more fields of the datasets stored in said database, said method comprising: providing an information signal representing said form (500) for inputting said filter conditions by the user; and generating an information signal for displaying the so defined filter conditions in a tree view (600, 700).

## Description

### FIELD OF THE INVENTION

The present invention relates to the filtering of databases, and more particularly, the invention relates to the definition of form-based filter conditions for accessing the datasets of a database.

### DESCRIPTION OF THE RELATED ART

Databases nowadays form a common tool used in connection with computers. Databases are application programs running on computers and they are used to store and manage data, and they provide methods to retrieve and update the stored data.

The stored data forms the actual database where - in case of relational databases - datasets are stored as parts of tables arranged in columns and rows. The program to access the so stored data is called a database management system (DBMS) and sometimes the combination of the DBMS and the stored data together in a somewhat vague terminology are referred to as a database.

Databases can be searched or queried either by a query language, such as the structured query language SQL, but it is also known to query a database based on input forms where filter conditions can be set for the individual fields of the datasets contained in the database.

The user interface for handling such form-based database filters up to now is not very convenient since the filter conditions set by the user are displayed by displaying the input-forms, which is a view difficult to be quickly reviewed or examined by the user.

It is therefore an object of the present invention to provide a tool which enables the user to review or examine the filter conditions set based on input-forms in a more easy manner.

### SUMMARY OF THE INVENTION

According to an aspect of the present invention there is provided to the user a tree view displaying to him the filter conditions as set by the user by inputting them into an input form. The tree view is a particularly simple and efficient way of displaying the filter conditions set by the user, thereby making it easier for the user to check at a glance which conditions actually have been set.

Preferrably the user can not only set conditions to be linked by a boolean AND which are input into a single input form, but the user can also input conditions to be linked to other filter conditions by a boolean OR. This can be attained by providing the user with multiple input forms, the conditions set in one of the forms being linked to the ones in another form by a boolean OR.

Preferably the user is provided with a functionality which enables him by pushing a button in the tree view to open a further input form into which he can input filter conditions to be linked to the other filter settings by a boolean OR.

By providing a context menu for the display of the tree view the user can edit and modify the filter conditions in a particularly easy manner. Preferably this manipulation of the filter settings can also be carried out by performing drag-and-drop operations in the tree view.

Conditions to be linked by a boolean AND are displayed as leaves in the tree view, several leaves belonging to a node, and the individual nodes with their filter conditions being linked by a boolean OR. This provides a systematic display of the filter conditions set by the user which can easily and quickly be reviewed and examined by the user.

By applying the filter conditions as set by the user he will be provided with an output in accordance with the filter conditions as set by the user.

Preferrably a setting of filter conditions can be stored to be available also for later usage.

Further features and advantages of the present invention will become apparent from the following detailed description of preferred embodiments of the invention in connection with the accompanying drawings.

### BRIEF DESCRIPTION OF THE DRAWINGS

Fig. 1 shows a block diagram of a computer system which can be used in connection with a preferred embodiment of the present invention.

Fig. 2 schematically illustrates the operation of a database.

Fig. 3 illustrates a flowchart according to a preferred embodiment of the present invention.

Fig. 4 illustrates a table stored in a database.

Fig. 5 shows an input form according to a preferred embodiment of the present invention.

Fig. 6 shows a filter conditions tree view according to a preferred embodiment of the present invention.

Fig. 7 shows another tree view according to a preferred embodiment of the present invention.

Fig. 8 shows a flowchart of a method according to a preferred embodiment of the present invention.

### DETAILED DESCRIPTION OF THE PREFERRED EMBODIMENTS

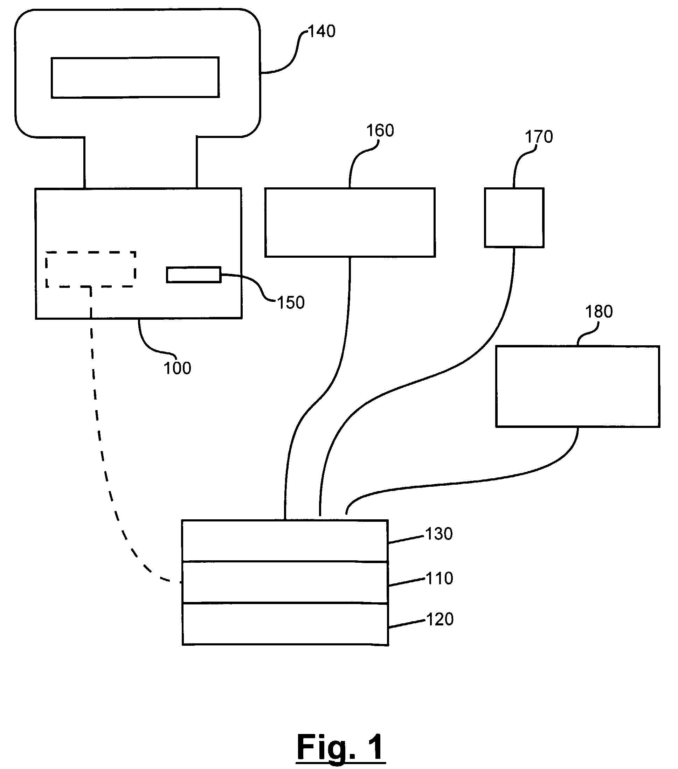

Fig. 1 schematically shows the configuration of a computer system to be used in connection with the preferred embodiment of the present invention. The computer 100 contains a CPU 110, a memory 120, and an I/O-unit 130. The computer 100 is capable of executing programs by carrying out computer instructions through CPU 110 which the CPU fetched from memory 120 and which may have been stored in a storage device 150 such as a CD-ROM or a floppy disk. The I/O-unit 130 is connected to a keyboard 160 and a mouse 170 to enable a user to input data to the computer, and it is further connected to a printer 180 to output documents as hardcopies. Computer 100 is further connected to a display unit 140 such as a monitor.

Those skilled in the art will readily recognize that the foregoing combination is just an illustrative example and not to be understood as limiting the features and advantages of the present invention as outlined in the following.

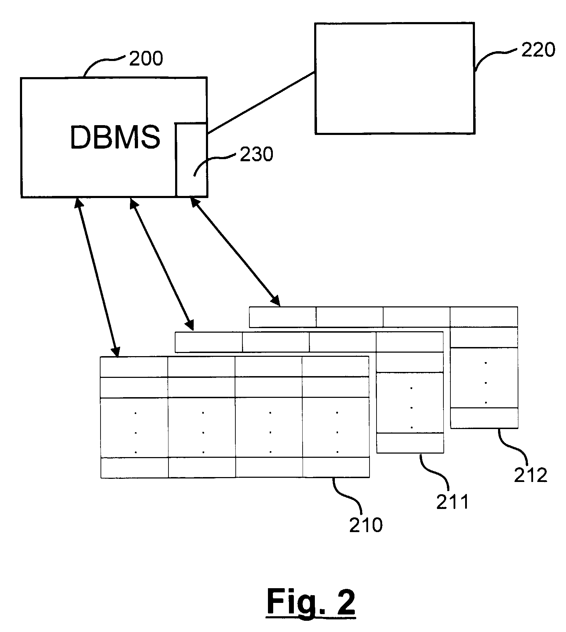

Fig. 2 schematically illustrates the operation of a database running on a computer as for example shown in Fig. 1. The database contains tables 210, 211, and 212 in which datasets of the database are stored and arranged in columns and rows. Database management system 200 is a tool for accessing, editing, storing, and querying the database tables 210 to 212. The results of an access, a query or the like are then displayed on terminal 220 to be viewed by the user.

DBMS 200 contains a tool 230 to perform a filtered access to database tables 210 to 212. This means that a user can set filter conditions, the database tables then are accessed and checked whether they match the defined filter settings. On terminal 220 then only the datasets which match the filter conditions as set by the user are displayed. Such an operation is called a filtering of a database.

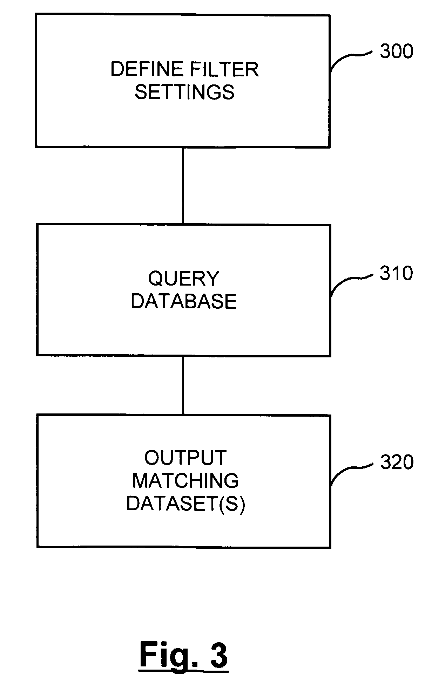

The steps for carrying out such a filtering are schematically shown in Fig. 3. At first the user defines the filter settings in step 300, then the database is queried in step 310, and the dataset(s) matching the defined filter settings then are output in step 320, for example to terminal 220, but they can also be output to printer 180 shown in Fig. 1.

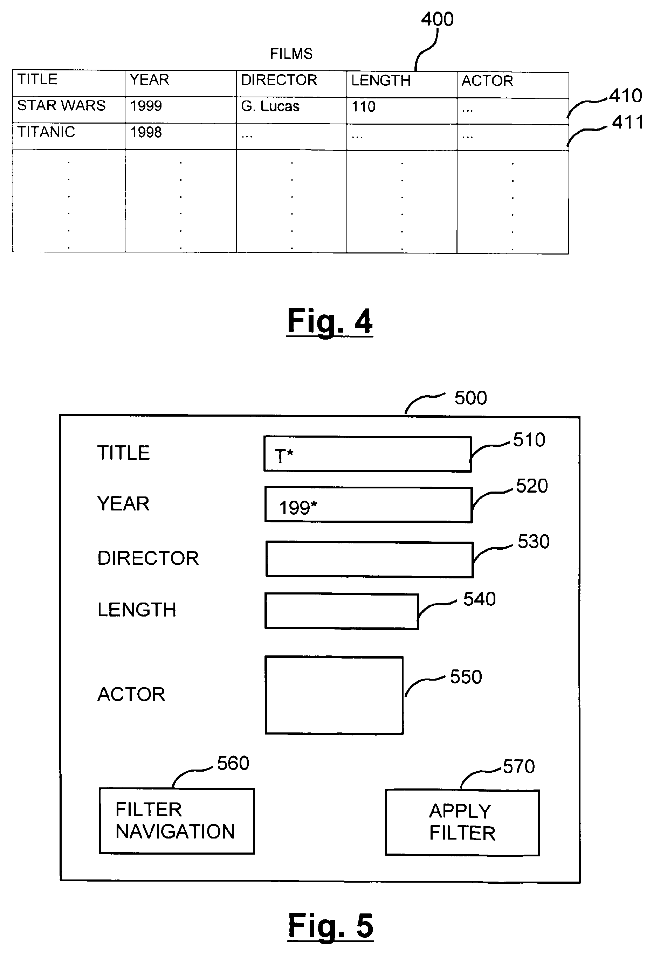

Fig. 4 shows in more detail an example for a database table stored in the database. The table 400 is part of a database being named "films". The data in the table 400 is arranged in columns and rows, wherein the first row contains the descriptors for the individual columns, and the following rows 410, 411, etc. form individual datasets contained in the database. In the example of Fig. 4 the datasets contain information about films, such as the title of the film, the year of its production, its director and so on.

A user can now filter the contents of a database for retrieving only those datasets which match filter conditions as defined by the user. For setting such filter conditions an input form 500 as shown in Fig. 5 is provided to the user by displaying the form 500 on a terminal. The form 500 contains individual fields 510, 520, 530, 540, and 550 in which the user can define filter conditions for the individual fields of the datasets of the database. The conditions can either be set by inserting concrete terms, but also wildcards can be used as shown in form 500. Leaving a field empty means that no condition is set for this field. In the example of Fig. 5 the user has chosen to extract or to filter all datasets from the database where the title of the film starts with the character "T" and where the production year lies in the range between 1990 and 1999.

If the user pushes the button 570 of form 500, then the so defined filter conditions will be applied to the database contents, and as a result the datasets matching those filter conditions will be output.

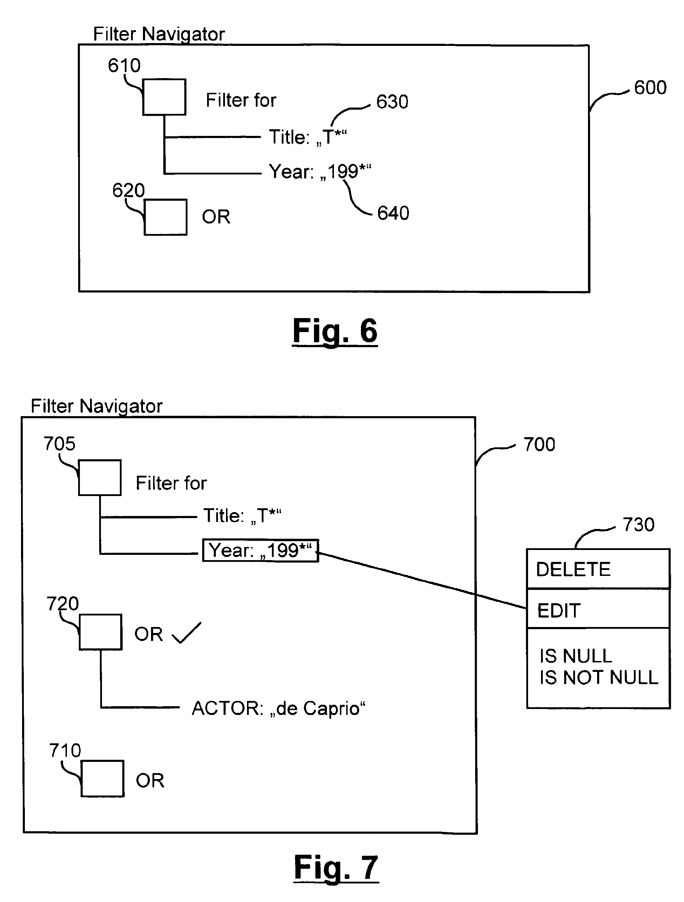

If the user pushes the button "filter navigation" 560, then there is displayed a window as shown in Fig. 6. Window 600 displays a tree view of the filter conditions defined by the user. It contains nodes 610 and 620 and leaves 630 and 640. Under node 610 there are displayed the filter conditions input in form 500 of Fig. 5 as leaves 630 and 640.

The node 620 in case of window 600 does not contain any leaves yet. If the user pushes the node 620 referenced by "OR", then he will be provided with a new (empty) input form as form 500 shown in Fig. 5 where he can input further filter settings. The newly inputted filter conditions then are automatically displayed in the tree view as shown in Fig. 7. In the example of Fig. 7 the user has inserted the additional filter condition that an actor of the film should have the name "de Caprio". Since this condition has been inputted into a form which showed up after the user pushed the OR-button 620 of Fig. 6, the new condition related to the actor is linked to the previously defined conditions by a boolean OR as shown in Fig. 7. The tick 725 shown in window 700 next to the OR-button 720 indicates this button as being "active", in other words it indicates that the conditions shown as leaves belonging to OR-button 720 are linked to the conditions belonging to button 705 by a boolean OR. The OR-button 710 next to which no tick is shown can be used for inputting further conditions to be linked by an additional boolean OR. By pushing button 710 the user would be provided with a further input form, and the settings input into this form would then be displayed as leaves belonging to button 710. Moreover, after having input those additional filter conditions, button 710 also would be marked by a tick.

Any filter settings inputted into a single form (such as form 500 shown in Fig. 5) are linked by a boolean AND, and further filter conditions to be linked by a boolean OR can be inserted into a new input form which shows up after pushing the OR-button 620 in Fig. 6 or OR-button 710 in Fig. 7.

Window 700 shows the result of the insertion of such an additional filter condition to be linked by a boolean OR after having pushed OR-button 620 shown in Fig. 6. Further conditions to be linked by a boolean OR can then be inserted by the user by pushing the OR-button 710 shown in window 700. When looking at window 700, the user readily recognizes that the so far defined filter conditions define a search for films the title of which starts with a "T" and the production year of which lies in the 90's, or for films where the actor is "de Caprio".

The filter settings as displayed by window 700 can be modified by the user through drag-and-drop operations. Another possibility to modify the filter conditions displayed in window 700 is by selecting an item and by calling a context menu for that item as shown by window 730 which is the context menu for the selected search item production year. The user can choose in the context menu whether he wishes to delete or to edit a search item, whether it should be set as null, or whether it should be set as not being null. To choose an item to be set as null means that only those datasets are retrieved where the corresponding data field of the dataset contains no entry. The option "is not null" means that only datasets are retrieved which in this field has an entry.

The tree view shown in window 700 provides the user with a highly convenient and easy to manage view onto the defined filter conditions. The user can review or examine at a glance which filter conditions have been set, and he can very easily modify the filter conditions.

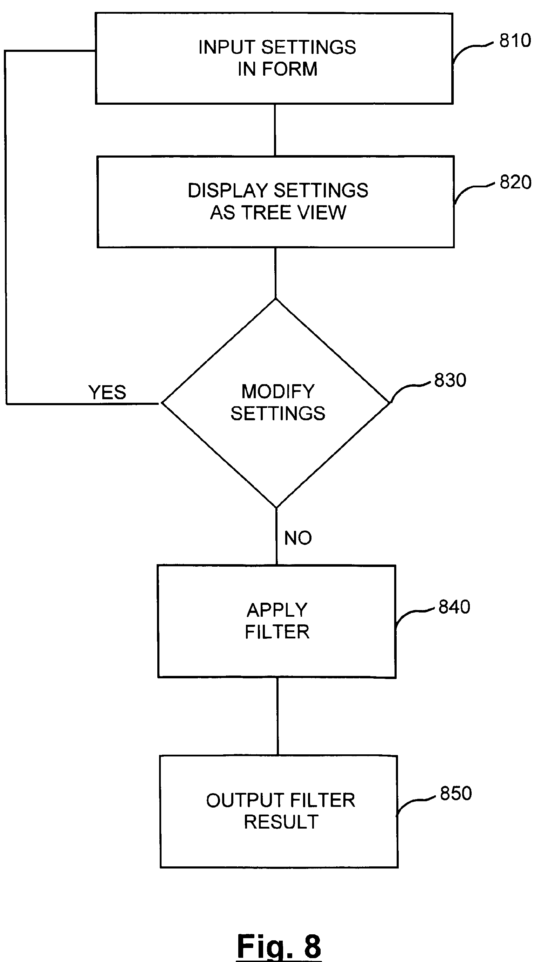

Fig. 8 shows a flowchart of the method for defining filter conditions based on input forms in accordance with a preferred embodiment of the present invention as explained before.

In step 810 a user can input filter conditions into an input form such as form 500 shown in Fig. 5. In step 820 then the so input filter conditions or the corresponding filter settings are displayed as a tree view as shown in windows 600 and 700 in Figs. 6 and 7, respectively.

In step 830 the user can then choose whether he wishes to modify the settings displayed in the tree view. This can be done by inserting additional filter conditions to be linked by a boolean OR, as explained in connection with Fig. 7, by a drag-and-drop operation performed in the tree window, or by using a context menu as explained in connection with Fig. 7. The modification, however, can also be performed by modifying the entries in an input form 500, this modification then is automatically displayed in the tree view showing the filter settings. This is illustrated by the option "YES" branching from step 830. If the modification, however, is performed by a drag-and-drop operation or by using the context menu, then no return to step 810 is necessary, since the corresponding modifications can be executed without returning to the input form.

If no modifications are deemed necessary to the user, then in step 840 he may choose to apply the filter for which the filter conditions have been defined in steps 810 to 830.

The filter is then applied to the contents of the database, and in step 850 the results which match the filter conditions as defined are output. The output of step 850 are those datasets which match the filter conditions defined in steps 810 to 830.

It will be understood by the skilled person that the steps of Fig. 8 (and other steps and functions mentioned in connection with the foregoing description of a preferred embodiment of the invention) represent actions performed by the CPU 110 in accordance with computer instructions of a computer program. Individual steps and functions according to a preferred embodiment of the present invention therefore may be implemented by a computer program causing the CPU to execute instructions which represent the corresponding steps and functions of the present invention. The computer instructions can also be stored on a computer-readable medium. Therefore, the present invention can be implemented by a software tool formed by a computer program causing the computer to execute a method according to a preferred embodiment of the present invention as explained before.

The invention can be implemented by a computer program comprising computer program code or application code. Application code or computer program code may be embodied in any form of a computer program product. A computer program product comprises a medium configured to store or transport computer-readable code, or in which computer-readable code may be embedded. Some examples of computer program products are CD-ROM disks, ROM cards, floppy disks, magnetic tapes, computer hard drives, servers on a network, and carrier waves. The computer program product may also comprise signals which do not use carrier waves, such as digital signals transmitted over a network (including the internet) without the use of a carrier wave. The computer program product may then be implemented as any transmission link, such as a connection to the internet, a LAN, a WAN, a public switched telephone network, or the like.

Moreover, the invention may be implemented in a client-server architecture, which means that some or all parts of a computer program are running on a server, and the remaining parts are running on a client. Through access to the server, the client may then in cooperation with the server implement a computer program embodying an implementation of the present invention. Instead of displaying a processing result on the server, a display on the client may then for example be generated based on an information signal transmitted through a transmission link, the signal having such a characteristics that it contains the necessary information for generating the display at the client side.

The invention may further be implemented by a computer which is programmed such that it carries out a method as explained hereinbefore. Such a computer may be realized either by being programmed through a sequence of program instructions to carry out such a method, or it may be configured by dedicated hardware such that it carries out a method explained hereinabove.

Other embodiments will be apparent to those skilled in the art from the consideration of the specification and practice of the invention disclosed therein. It is intended that the specification and the examples be considered as exemplary only, without limiting the spirit and scope of the present invention.

## Claims

1. A method for enabling a user to define the filter conditions for accessing a database based on an input form (500), said form containing fields where a user can set the filter conditions for one or more fields of the datasets stored in said database, said method comprising:
providing an information signal representing said form (500) for inputting said filter conditions by the user; and
generating an information signal for displaying the so defined filter conditions in a tree view (600, 700).

2. The method of claim 1, further comprising:
generating a display based on said information signal for displaying.

3. The method of claim 1, further comprising:
providing an option in said tree view and/or an option of inputting data into said input form enabling the user to modify the defined filter conditions.

4. The method of claim 1, wherein the filter conditions as defined by the entries into a single input form (500) are interpreted as linking those entries by a boolean AND.

5. The method of claim 3, further comprising:
providing a plurality of information signals representing a corresponding plurality of said input forms for modifying said filter conditions, the conditions input into one of said forms being linked to the filter conditions input into another one of said forms by a boolean OR.

6. The method of claim 3, further comprising:
providing said tree view with a button (620, 710, 720) enabling the user to enter further filter conditions to be linked to the already defined ones by a boolean OR.

7. The method of claim 1, wherein
nodes of said tree view indicate that filter conditions of said nodes are to be linked by a boolean OR; and
the leaves belonging to a node of said tree view indicate filter conditions to be linked by a boolean AND when filtering the data of said database.

8. The method of claim 3, further comprising:
modifying the filter conditions represented by said information signal for displaying said tree view based on drag-and-drop operations performed in said tree view.

9. The method of claim 3, further comprising :
providing an information signal representing a context menu to manipulate the entries in said tree view.

10. The method of claim 1, further comprising:
storing a defined filter condition setting for it being available to the user at later stages.

11. A software tool for enabling a user to define the filter conditions for accessing a database based on an input form (500), said form containing fields where a user can set the filter conditions for one or more fields of the datasets stored in said database, said software tool comprising:
a portion configured for providing an information signal representing said form (500) for inputting said filter conditions by the user; and
a portion configured for generating an information signal for displaying the so defined filter conditions in a tree view (600, 700).

12. The software tool of claim 11, further comprising:
a portion configured for generating a display based on said information signal for displaying.

13. The software tool of claim 11, further comprising:
a portion configured for providing an option in said tree view and/or an option of inputting data into said input form enabling the user to modify the defined filter conditions.

14. The software tool of claim 11, wherein the filter conditions as defined by the entries into a single input form (500) are interpreted as linking those entries by a boolean AND.

15. The software tool of claim 13, further comprising:
a portion configured for providing a plurality of information signals representing a corresponding plurality of said input forms for modifying said filter conditions, the conditions input into one of said forms being linked to the filter conditions input into another one of said forms by a boolean OR.

16. The software tool of claim 13, further comprising:
a portion configured for providing said tree view with a button (620, 710, 720) enabling the user to enter further filter conditions to be linked to the already defined ones by a boolean OR.

17. The software tool of claim 13, wherein
nodes of said tree view indicate that filter conditions of said nodes are to be linked by a boolean OR; and
the leaves belonging to a node of said tree view indicate filter conditions to be linked by a boolean AND when filtering the data of said database.

18. The software tool of claim 13, further comprising:
a portion configured for modifying the filter conditions represented by said information signal for displaying said tree view based on drag-and-drop operations performed in said tree view.

19. The software tool of claim 13, further comprising:
a portion configured for providing an information signal representing a context menu to manipulate the entries in said tree view.

20. The software tool of claim 11, further comprising:
a portion configured for storing a defined filter condition setting for it being available to the user at later stages.

21. A computer program product comprising computer program code for enabling a user to define the filter conditions for accessing a database based on an input form (500), said form containing fields where a user can set the filter conditions for one or more fields of the datasets stored in said database, said computer program code comprising:
a computer program code portion configured for providing an information signal representing said form (500) for inputting said filter conditions by the user; and
a computer program code portion configured for generating an information signal for displaying the so defined filter conditions in a tree view (600, 700).

22. The computer program product of claim 21, wherein said computer program code comprises:
a computer program code portion configured for generating a display based on said information signal for displaying.

23. The computer program product of claim 21, wherein said computer program code comprises:
a computer program code portion configured for providing an option in said tree view and/or an option of inputting data into said input form enabling the user to modify the defined filter conditions.

24. A computer program comprising computer program code for enabling a user to define the filter conditions for accessing a database based on an input form (500), said form containing fields where a user can set the filter conditions for one or more fields of the datasets stored in said database, said computer program code comprising:
a computer program code portion configured for providing an information signal representing said form (500) for inputting said filter conditions by the user; and
a computer program code portion configured for generating an information signal for displaying the so defined filter conditions in a tree view (600, 700).

25. A computer programmed for carrying out a method for enabling a user to define the filter conditions for accessing a database based on an input form (500), said form containing fields where a user can set the filter conditions for one or more fields of the datasets stored in said database, said method comprising:
providing an information signal representing said form (500) for inputting said filter conditions by the user; and
generating an information signal for displaying the so defined filter conditions in a tree view (600, 700).
